# EUROPEAN PATENT APPLICATION

(11) **EP 4 567 356 A1**
(43) Date of publication of application: **11.06.2025**
(21) Application number: 23846303.8
(22) Date of filing: 18.07.2023
(51) Int. Cl.: F25J 1/00, F25J 3/08, B01D 53/04, B01D 53/047, C01B 32/50, B01J 20/26

(54) **CO2 SEPARATION SYSTEM**

(30) Priority: 26.07.2022 JP 2022118342
(71) Applicant: National Institute for Materials Science, Tsukuba-shi, Ibaraki 305-0047 (JP)
(72) Inventor: ICHINOSE, Izumi, Tsukuba-shi, Ibaraki 305-0047 (JP); BIN ISMAIL, Edhuan, Tsukuba-shi, Ibaraki 305-0047 (JP); INOUE, Mizuki, Tsukuba-shi, Ibaraki 305-0047 (JP)
(74) Representative: Dehns
(86) International application number: PCT/JP2023/026275
(87) International publication number: WO 2024/024572

(57) **Abstract**

A CO₂ separation system, including: first CO₂ separation equipment 1; second CO₂ separation equipment 2; a first pipe 14; low-concentration CO₂ gas discharge equipment 60; and gas reflux equipment 70 including a second pipe 16 and a high-concentration CO₂ gas discharge apparatus 45, wherein the first CO₂ separation equipment 1 includes a cryogenic separation apparatus configured to separate CO₂ from gas to be treated by cryogenic separation treatment, the first pipe 14 supplies gas discharged from the first CO₂ separation equipment 1 to the second CO₂ separation equipment 2, the second CO₂ separation equipment 2 includes an adsorption separation apparatus including rubber as a CO₂ adsorbent, the low-concentration CO₂ gas discharge equipment 60 discharges gas containing low concentration CO₂ from the second CO₂ separation equipment 2, the high-concentration CO₂ gas discharge apparatus 45 discharges gas containing CO₂ having a concentration higher than the low concentration from the second CO₂ separation equipment 2, in the gas reflux equipment 70, at least a part of the gas discharged from the high-concentration CO₂ gas discharge apparatus 45 is returned to the first CO₂ separation equipment 1 through the second pipe 16, and the first CO₂ separation equipment 1 performs cryogenic separation treatment for separating CO₂ from the gas returned by the gas reflux equipment 70.

## Description

### Technical Field

The present invention relates to a CO₂ separation system.

### Background Art

From the viewpoint of reducing greenhouse gas emissions in consideration of desorption energy efficiency, it is earnestly desired to separate and recover CO₂ from natural gas or associated gas containing a high concentration of CO₂ with low energy.

In general, the separation process of natural gas and associated gas can be classified as follows by CO₂ concentration.
(1) Case of 2% or less of CO₂ concentration
   In this case, it is not always necessary to separate CO₂. This is because when the CO₂ concentration is 2% or less, the influence of corrosion of the pipeline is small. However, when liquefied natural gas (LNG) is produced, the acid gas removal (AGR) process is applied before the application of the cryogenic separation method.
(2) Case of around 30% of CO₂ concentration
   In older equipment, molten potassium carbonate has been used, but is being replaced with the AGR process using amine solvents. The amine solvent can cause the adsorbent to be regenerated by heat, leading to easy maintenance of equipment. On the other hand, in molten potassium carbonate, corrosion of a steel material is often a problem.
(3) Case of 30 to 60% of CO₂ concentration
   As the adsorbent (sorbent), an organic solvent such as propylene carbonate (PC) is used. When the CO₂ concentration is high, a large amount of thermal energy is required for regeneration of the amine solvent, and thus the AGR process is not available.
(4) Case of 70% or more of CO₂ concentration
   At present, development is difficult, and expectations for a novel CO₂ separation technology are high.

Under such circumstances, in the development of natural gas, it is required to separate CO₂ having a high concentration of 30% or more into a lower concentration of 2% or less. In addition, not only natural gas but also mixed gas containing high concentration CO₂ is generated in thermal power plants, production of biogas, and the like, and low cost recovery technology is expected.

The method for recovering CO₂ using an organic solvent as an adsorbent (sorbent) is problematic in that energy loss is large because it is necessary to dissolve the mixed gas into high pressure microbubbles, and a recovery cost of the volatilized organic solvent is also required because a part of the organic solvent is volatilized.

### Citation List

### Patent Literature

Patent Literature 1: Japanese Unexamined Utility Model Publication No. 61-15489

### Non Patent Literatures

Non Patent Literature 1: Jun Matsumoto et al., Journal of the Japanese Association for Petroleum Technology, Vol. 76, No. 6, pp. 512-516 (November 2011)
Non Patent Literature 2: Zenji Fujiyasu, Cryogenic Engineering, Vol. 5, No. 4, pp. 181-185 (1970)
Non Patent Literature 3: Shigeru Kimura, Hitachi Review, Vol. 48, No. 8, pp. 69-74 (August 1966)
Non Patent Literature 4: Izumi Ichinose, et al., JACI GSC Symposium (June 15 to 16, 2022)

### Summary of Invention

### Technical Problem

In view of the above background, an object of the present invention is to provide a CO₂ separation system that efficiently separates CO₂ from natural gas, biogas, and the like containing high concentration CO₂ with low energy and supplies a desired gas such as methane.

### Solution to Problem

The configuration of the present invention will be described below.

### (Configuration 1)

A CO₂ separation system, including: first CO₂ separation equipment; second CO₂ separation equipment; a first pipe; low-concentration CO₂ gas discharge equipment; gas reflux equipment including a second pipe and a high-concentration CO₂ gas discharge apparatus, wherein the first CO₂ separation equipment includes a cryogenic separation apparatus configured to separate CO₂ from gas to be treated by cryogenic separation treatment, the first pipe supplies gas discharged from the first CO₂ separation equipment to the second CO₂ separation equipment, the second CO₂ separation equipment includes an adsorption separation apparatus including rubber as a CO₂ adsorbent, the low-concentration CO₂ gas discharge equipment discharges gas containing low concentration CO₂ from the second CO₂ separation equipment, the high-concentration CO₂ gas discharge apparatus discharges gas containing CO₂ having a concentration higher than the low concentration from the second CO₂ separation equipment, in the gas reflux equipment, at least a part of the gas discharged from the high-concentration CO₂ gas discharge apparatus is returned to the first CO₂ separation equipment through the second pipe, and the first CO₂ separation equipment performs cryogenic separation treatment for separating CO₂ from the gas returned by the gas reflux equipment.

### (Configuration 2)

The CO₂ separation system according to the configuration 1, wherein the second CO₂ separation equipment includes a first adsorption tower group including one or more adsorption towers and a second adsorption tower group including one or more adsorption towers, the adsorption tower has a flow path through which gas flows while being retained therein, and the CO₂ adsorbent, and the CO₂ separation system further includes a cooling means capable of cooling the flow path and the CO₂ adsorbent.

### (Configuration 3)

The CO₂ separation system according to the configuration 2, wherein the first adsorption tower group and the second adsorption tower group are adsorption tower groups forming a pair in the same configuration.

### (Configuration 4)

The CO₂ separation system according to the configuration 2, wherein at least a part of the adsorption towers constituting the first adsorption tower group and the second adsorption tower group is disposed in series in the first adsorption tower group and the second adsorption tower group.

### (Configuration 5)

The CO₂ separation system according to the configuration 2, wherein a gas breakthrough time per adsorption tower is 5 minutes or more and 60 minutes or less.

### (Configuration 6)

The CO₂ separation system according to any one of configurations 2 to 5, wherein a CO₂ concentration in gas introduced into the first adsorption tower group and the second adsorption tower group is adjusted to 10 mol% or more and 40 mol% or less, and a CO₂ concentration in gas discharged from the first adsorption tower group and the second adsorption tower group is adjusted to 2 mol% or more and 10 mol% or less.

### (Configuration 7)

The CO₂ separation system according to any one of configurations 2 to 5, wherein a CO₂ concentration in gas introduced into the first adsorption tower group and the second adsorption tower group is adjusted to 5 mol% or more and 10 mol% or less, and a CO₂ concentration in gas discharged from the first adsorption tower group and the second adsorption tower group is adjusted to 0 mol% or more and 2 mol% or less.

### (Configuration 8)

The CO₂ separation system according to any one of configurations 2 to 7, wherein an adsorption pressure of the adsorption tower is adjusted to 5 MPa or more and 45 MPa or less.

### (Configuration 9)

The CO₂ separation system according to the configuration 2, wherein a temperature of the cooling is -50°C or more and 0°C or less.

### (Configuration 10)

The CO₂ separation system according to the configuration 1, wherein a CO₂ concentration of the high concentration is 50 mol% or more and 99 mol% or less.

### (Configuration 11)

The CO₂ separation system according to any one of configurations 1 to 10, wherein the rubber is provided in one or more states selected from the group consisting of a pellet shape, a powder shape, and a fine particle shape.

### (Configuration 12)

The CO₂ separation system according to the configuration 11, wherein the rubber is provided by being packed in a mesh or porous bag.

### (Configuration 13)

The CO₂ separation system according to the configuration 1, wherein the cryogenic separation apparatus includes: a compression apparatus configured to compress supplied gas; a cooling apparatus configured to cool gas introduced through the compression apparatus; and an apparatus configured to discharge CO₂ liquefied by being subjected to the cooling.

### (Configuration 14)

The CO₂ separation system according to the configuration 1, wherein the gas to be treated is introduced into the cryogenic separation apparatus through decompression equipment configured to decompress gas to separate liquid CO₂.

### (Configuration 15)

The CO₂ separation system according to any one of configurations 1 to 14, wherein the gas to be treated is introduced into the cryogenic separation apparatus through dehydration equipment configured to perform dehydration.

### Advantageous Effect of Invention

The present invention provides a CO₂ separation system configured to efficiently separate CO₂ from natural gas, biogas, or the like containing a high concentration of CO₂ with low energy and supply a desired gas such as methane.

### Brief Description of Drawings

Fig. 1 is a system configuration view showing an overall configuration of a CO₂ separation system of the present invention.
Fig. 2 is a configuration view showing a configuration of first CO₂ separation equipment that is a part of the CO₂ separation system of the present invention.
Fig. 3 is a configuration view showing a configuration of second CO₂ separation equipment that is a part of the CO₂ separation system of the present invention.
Fig. 4 is a cross-sectional view showing a structure of an adsorption tower.
Fig. 5 is an explanatory view for explaining a configuration of an adsorption tower.
Fig. 6 is a characteristic view showing adsorption and desorption characteristics of CO₂ using rubber.
Fig. 7 is a characteristic view showing a relationship between an absolute pressure and an amount of CO₂ adsorbed.
Fig. 8 is a view showing a breakthrough curve according to Examples.

### Description of Embodiments

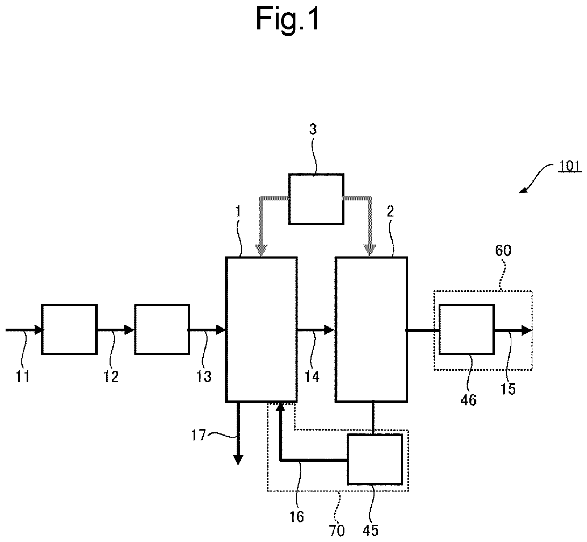

The CO₂ separation system according to the present embodiment will be described with reference to Figs. 1, 2, and 3.

As illustrated in Fig. 1, the CO₂ separation system 101 of the present embodiment includes first CO₂ separation equipment 1 that is a cryogenic separation apparatus, second CO₂ separation equipment 2, a pipe 14 (exemplified as a "first pipe"), low-concentration CO₂ gas discharge equipment 60, and gas reflux equipment 70 including a reflux pipe 16 (exemplified as a "second pipe") and a high-concentration CO₂ gas discharge apparatus 45. Fig. 1 illustrates a configuration in which the CO₂ separation system 101 further includes decompression equipment 4, dehydration equipment 5, and pipes 11 to 13.

However, it is not essential for the CO₂ separation system 101 to include the decompression equipment 4 and the dehydration equipment 5. Both or any one of the decompression equipment 4 and the dehydration equipment 5 may be omitted from the CO₂ separation system 101. Hereinafter, gas from which CO₂ is to be separated by the CO₂ separation system 101 is referred to as a "gas to be treated". The gas to be treated is, for example, natural gas or associated gas, and contains CO₂ in addition to a desired component (for example, methane).

Herein, the first CO₂ separation equipment 1 and the second CO₂ separation equipment 2 are connected to the cooling equipment 3. The cooling equipment 3 is capable of efficiently and precisely cooling the first CO₂ separation equipment 1 and the second CO₂ separation equipment 2. The cooling equipment 3 is not particularly limited, but examples thereof include a vapor compression refrigerator, and a cooling medium is not particularly limited, but CO₂ can be used.

The gas to be treated is supplied to the first CO₂ separation equipment 1 through, for example, the decompression equipment 4 and the dehydration equipment 5. First, the gas to be treated is supplied to the decompression equipment 4 through the pipe 11. Then, the gas to be treated that has passed through the decompression equipment 4 is supplied to the dehydration equipment 5 through the pipe 12. Then, the gas to be treated that has passed through the dehydration equipment 5 is supplied to the first CO₂ separation equipment 1 through the pipe 13.

The first CO₂ separation equipment 1 is connected to the second separation equipment 2 through the pipe 14. A reflux pipe 16 for refluxing a part of the gas treated in the second separation equipment 2 to the first separation equipment 1 is connected to the second separation equipment 2 and the first separation equipment 1. Further, the first CO₂ separation equipment 1 includes a discharge pipe 17 configured to discharge liquid CO₂ generated by treatment in the first CO₂ separation equipment 1 and liquid of other condensable gases.

### <Decompression equipment 4>

The decompression equipment 4 is equipment provided for the purpose of decompressing gas to be treated having a high pressure of 60 MPa or more (for example, a high pressure gas welling up from deep in the ground), and includes, for example, a choke and a temperature adjusting apparatus. When the gas to be treated has an initial pressure of, for example, nearly 120 MPa and contains water, rapid cooling by pressure reduction causes methane hydride to be formed, and thus preventing this requires a temperature adjusting apparatus. In a normal decompression operation, the pressure is often reduced stepwise from 120 MPa to 60 MPa, 15 MPa, 3 MPa, or the like, for example, while the temperature is maintained at room temperature or more. When the gas to be treated contains a large amount of CO₂, the decompression equipment 4 generates liquid CO₂ by appropriate decompression, and thus may include a pipe configured to discharge CO₂. In addition, in the decompression equipment 4, water or condensate (liquid hydrocarbon) may be generated by cooling, and water or condensate can also be discharged from a pipe configured to discharge CO₂. When the gas to be treated is natural gas containing a condensate, it is desirable to discharge the condensate as a valuable material.

### <Dehydration equipment 5>

The dehydration equipment 5 is equipment provided for the purpose of removing moisture in the gas to be treated. The dehydration equipment 5 has a removing agent for removing moisture in the gas to be treated. As the agent for removing water, molecular sieve (zeolite, registered trademark), silica gel, activated carbon, activated alumina, ethylene glycol derivative, and the like can be used. In particular, the dehydration equipment 5 using silica gel or activated alumina capable of achieving a dew point of about -40°C can be suitably used. The water in the gas to be treated becomes substantially liquid by lowering the temperature, and the dehydration equipment 5 is used to remove moisture in the gas phase that does not aggregate even around room temperature. Although not illustrated, the dehydration equipment 5 includes a heater and a cooler for desorption vapor in order to regenerate the agent for removing water. In addition, the dehydration equipment 5 is desirably operated at 0°C or more in order to prevent the formation of the hydride. In addition, in the case of continuous operation, the dehydration equipment 5 is one including a plurality of adsorption towers. For example, the dehydration equipment 5 is provided when the gas to be treated is natural gas.

### <First CO₂ separation equipment 1>

The first CO₂ separation equipment 1 is an apparatus configured to perform cryogenic separation treatment for separating CO₂ from gas to be treated. As the first CO₂ separation equipment 1, a generally used cryogenic separation apparatus can be used except for having a path in which at least a part of the gas refluxed through the reflux pipe 16 is treated by the first CO₂ separation equipment 1.

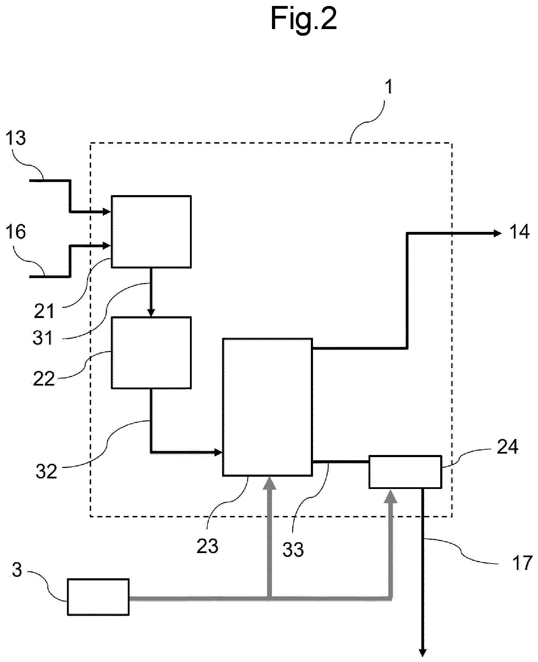

Fig. 2 is a configuration view according to an example of the first CO₂ separation equipment 1 of the present embodiment. As illustrated in Fig. 2, the first CO₂ separation equipment 1 includes, for example, a compression apparatus 21, a dehydration apparatus 22, a cooling apparatus 23, and a liquefied CO₂ discharge apparatus 24.

A pipe 13 configured to supply the gas to be treated and a reflux pipe 16 to which the gas to be refluxed from the second CO₂ separation equipment 2 is supplied are connected to a compression apparatus 21. The gas compressed by the compression apparatus 21 is supplied to a dehydration apparatus 22 through a pipe 31. Herein, the pressure of the gas after the compression treatment is, for example, 10 MPa or more and 50 MPa or less. The temperature increases when the gas is compressed, and thus the first CO₂ separation equipment 1 preferably includes a cooling apparatus 23.

The dehydration apparatus 22 is an apparatus that performs a dry gasification treatment (dehydration treatment) of removing moisture from the gas after the compression treatment. As a method for the dry gasification treatment, a method using silica gel or zeolite is excellent. Herein, the amount of water contained in the dry gas subjected to the dry gasification treatment is preferably controlled to 10 ppm or less. Dehydration on silica gel is desirably performed at 30°C or less because the adsorption amount decreases at high temperatures. When sufficient dehydration is performed in the dehydration equipment 5, the dehydration apparatus 22 can be omitted.

The gas subjected to the dry gasification treatment is supplied to the cooling apparatus 23 through the pipe 32. Herein, the cooling apparatus 23 is not particularly limited, but for example, a vapor compression refrigerator using CO₂ as a cooling medium is used, and cold heat thereof can be used. In addition, cooling by adiabatic expansion can be used as long as solidification of CO₂ does not occur.

The cooling apparatus 23 cools the supplied gas to -40°C or more and 0°C or less. The gas supplied to the cooling apparatus 23 is already dehydrated and no hydrate is formed, and thus the temperature of the cooling apparatus 23 is desirably low within a range in which solidification of CO₂ does not occur. In addition, the pressure is 10 MPa or more and 50 MPa or less, but it is desirable that the pressure is high within a range in which the safety of the pressure-resistant container can be secured. The cooled gas is conveyed to a liquefied CO₂ discharge apparatus 24 through a pipe 33, and a liquid material such as liquid CO₂ generated by cooling is discharged through a discharge pipe 17.

The liquefied CO₂ discharge apparatus 24 is a pump configured to discharge liquid CO₂, and needs to be cooled in cooling equipment 3 similarly to the cooling apparatus 23.

### <Second CO₂ separation equipment 2>

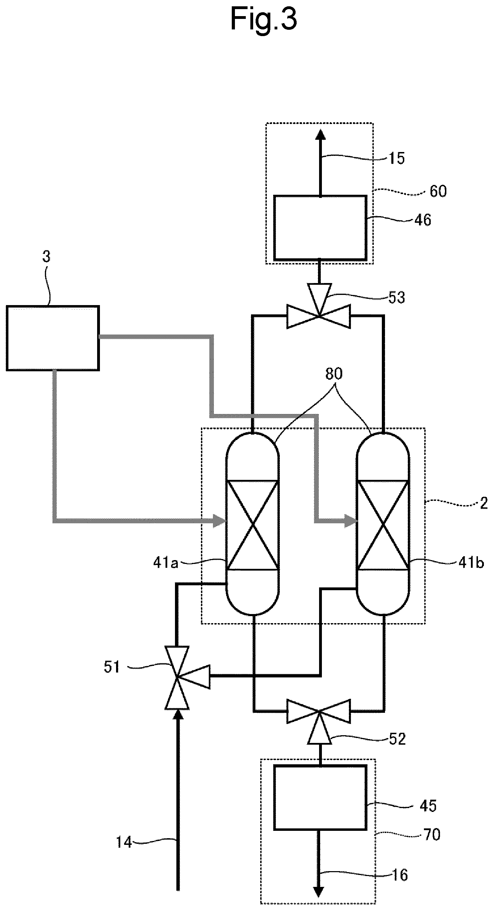

Fig. 3 is a configuration view according to an example of the second CO₂ separation equipment 2 according to the present embodiment. The second CO₂ separation equipment 2 is equipment configured to remove CO₂ that has not been completely separated by the cryogenic separation treatment in the first CO₂ separation equipment 1. As shown in Fig. 3, the second CO₂ separation equipment 2 includes an adsorption separation apparatus 80 including rubber as an adsorbent.

The adsorption separation apparatus 80 is a device that adsorbs and separates CO₂ in the gas supplied from the pipe 14, and desorbs CO₂. Specifically, the adsorption separation apparatus 80 includes two towers of the adsorption towers 41 (adsorption towers 41a and 41b) that incorporate, for example, rubber, which will be described later, as a CO₂ adsorbent. When there is no need to distinguish between the adsorption tower 41a and the adsorption tower 41b, they will be referred to as the adsorption tower 41. The number of the adsorption tower 41 included in the adsorption separation apparatus 80 is not limited to two towers, and may be three or more towers, or may be one tower. From the viewpoint of continuously treating the gas to be treated, the number of the adsorption tower 41 is preferably two or more.

As described above, the adsorption tower 41 incorporates rubber as a CO₂ adsorbent and adsorbs and desorbs CO₂. The adsorption towers 41a and 41b are identical and disposed in pairs.

The gas treated in the first CO₂ separation equipment 1 is introduced through a pipe 14 and a valve 51 into either the adsorption tower 41a or the adsorption tower 41b. The adsorption tower 41a and adsorption tower 41b are connected to a reflux pipe 16 through a valve 52 and a high-concentration CO₂ gas exhaust apparatus 45. In addition, the adsorption tower 41a and adsorption tower 41b are connected to a pipe 15 through a valve 53 and a flow rate regulator 46. Switching valves 51, 52, and 53 causes one of the adsorption towers 41a and 41b to be used for CO₂ adsorption, and the other is used for CO₂ desorption. That is, CO₂ adsorption and CO₂ desorption occur in parallel. CO₂ adsorption and CO₂ desorption are alternately performed in the adsorption tower 41a, and CO₂ adsorption and CO₂ desorption are alternately performed in the adsorption tower 41b.

The method of CO₂ adsorption and desorption in the adsorption tower 41 will be specifically described below. The valve 51 is opened to the adsorption tower 41a side and closed to the adsorption tower 41b side, the valve 52 is closed to the adsorption tower 41a side and opened to the adsorption tower 41b side, and the valve 53 is opened to the adsorption tower 41a side and closed to the adsorption tower 41b side, whereby the adsorption tower 41a is operated for CO₂ adsorption and the adsorption tower 41b is operated for CO₂ desorption. Thereafter, the valve 51 is closed to the adsorption tower 41a side and opened to the adsorption tower 41b side, the valve 52 is opened to the adsorption tower 41a side and closed to the adsorption tower 41b side, and the valve 53 is closed to the adsorption tower 41a side and opened to the adsorption tower 41b side, whereby the adsorption tower 41a is operated for CO₂ desorption and the adsorption tower 41b is operated for CO₂ adsorption. This treatment is then repeated to perform CO₂ adsorption and desorption. Herein, the adsorption and desorption are controlled by pressure. The adsorption tower 41a and adsorption tower 41b are thermally insulated, but the cooling equipment 3 is used for pre-cooling and maintaining a low temperature. Herein, the temperature inside the adsorption towers 41a and 41b during adsorption is preferably -50°C or more and 0°C or less, and more preferably -40°C or more and -20°C or less. The cooling equipment 3 is an example of a cooling means capable of cooling a flow path (a flow path 42 described below) through which gas flows while being retained therein, and the CO₂ adsorbent. Controlling the temperature inside the adsorption towers 41a and 41b during adsorption within this range can prevent solidification of CO₂ during desorption, and the effect of improving separation efficiency can be obtained. The temperature of the adsorption tower 41 of the second CO₂ separation equipment is desirably lower than the temperature of the first CO₂ separation equipment (cryogenic separation apparatus). This is because the second CO₂ separation equipment has a lower CO₂ concentration in the gas compared to the first CO₂ separation equipment, making solidification of CO₂ less likely to occur, and the lower temperature results in higher CO₂ separation efficiency in the adsorption tower 41.

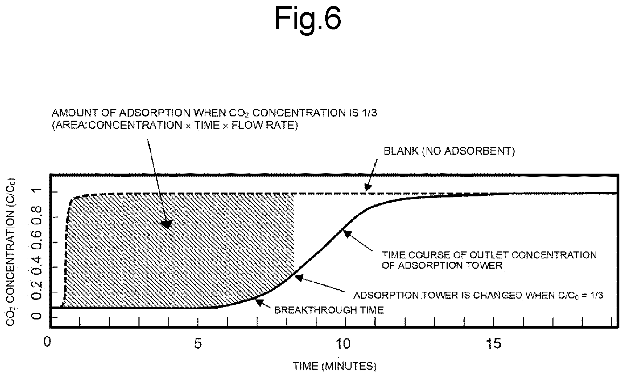

It is preferable that the switching between adsorption and desorption in the adsorption towers 41a and 41b (switching of the valves 51, 52, and 53) is performed based on the breakthrough time characteristics of the CO₂ gas in the adsorption tower 41, as shown in Fig. 6. It is preferable to switch between adsorption and desorption in the adsorption towers 41a and 41b by switching the valves 51 to 53 when the CO₂ concentration (C/C₀) at the outlet of one of the adsorption tower 41a and the adsorption tower 41b that is performing adsorption reaches approximately 1/3 (may be within the range of 1/4 or more and 1/2 or less). Switching between adsorption and desorption at this timing can maximize the adsorption and desorption efficiency. C₀ represents the maximum amount of CO₂ adsorbed in the adsorption tower.

The pressure during CO₂ adsorption in the adsorption towers 41a and 41b is preferably adjusted to 5 MPa or more and 45 MPa or less. The amount of CO₂ adsorbed to the CO₂ adsorbent depends on the pressure, and increases as the pressure increases, but it is difficult to increase the size of the adsorption tower at high pressure, and thus it is preferable to adjust the pressure to 5 MPa or more and 45 MPa or less. The value of 45 MPa is the maximum filling pressure of a 250-L vessel made of chromium molybdenum steel having a wall thickness of 22 mm, and it is not easy to manufacture an adsorption tower having a higher pressure resistance than this.

The gas discharged from the second CO₂ separation equipment 2 (adsorption tower 41) is divided into a treated gas controlled to have a low concentration of CO₂ (low-concentration CO₂ gas) and a high-concentration CO₂ gas having a higher CO₂ concentration than that (high-concentration CO₂ gas), as described below. The low-concentration CO₂ gas (treated gas) is discharged by the low-concentration CO₂ gas discharge equipment 60. On the other hand, the high-concentration CO₂ gas is refluxed to the first CO₂ separation equipment by the gas reflux equipment 70 (high-concentration CO₂ gas discharge apparatus 45 and reflux pipe 16). Hereinafter, the low-concentration CO₂ gas discharge equipment 60 and the gas reflux equipment 70 (high-concentration CO₂ gas discharge apparatus 45, and reflux pipe 16) will be described in detail.

### <Low-concentration CO₂ gas discharge equipment>

The low-concentration CO₂ gas discharge equipment 60 is equipment configured to discharge low-concentration CO₂ gas after CO₂ is adsorbed by the adsorption separation apparatus 80. That is, the low-concentration CO₂ gas discharge equipment 60 discharges gas containing CO₂ at a concentration lower than the concentration of CO₂ (low-concentration CO₂ gas) in the gas supplied from the pipe 14 to the adsorption separation apparatus 80.

Specifically, the low-concentration CO₂ gas discharge equipment 60 is, for example, an apparatus including a flow rate regulator 46 and a pipe 15 (treated gas discharge apparatus). The low-concentration CO₂ gas discharged from the second CO₂ separation equipment 2 is discharged from the CO₂ separation system 101 through the valve 53 and the low-concentration CO₂ gas discharge equipment 60. The flow rate regulator 46 adjusts the flow rate such that the pressure of the gas in the pipe 15 becomes slightly lower than the pressure during CO₂ adsorption in the towers of the adsorption towers 41a and 41b, and secures the pressure and gas retention time in the adsorption tower 41. The treated gas discharged from the low-concentration CO₂ gas discharge equipment 60 has a low CO₂ concentration, and thus the gas is not frozen and not clogged even in a polar region, and can be delivered to a consumption place through a pipeline or the like. In addition, when CO₂ is removed, it is possible to transport many natural gases in the same pipeline, and natural gas transport costs can be reduced.

Herein, the CO₂ concentration in the gas introduced into the adsorption towers 41a and 41b (that is, the gas supplied through the pipe 14) is preferably adjusted to 2 mol% or more and 40 mol% or less by the first CO₂ concentration separation equipment. The concentration of CO₂ in the low-concentration CO₂ gas discharged from the low-concentration CO₂ gas discharge equipment 60 is preferably adjusted to 0.5 mol% or more and 10 mol% or less. The CO₂ concentration in the gas introduced into the adsorption towers 41a and 41b is more preferably adjusted to 10 mol% or more and 40 mol% or less by the first CO₂ concentration separation equipment. The concentration of CO₂ in the low-concentration CO₂ gas discharged from the low-concentration CO₂ gas discharge equipment 60 is more preferably adjusted to 2 mol% or more and 10 mol% or less. When the CO₂ concentration in the gases introduced into the adsorption towers 41a and 41b and the CO₂ concentration in the low-concentration CO₂ gas discharged from the low-concentration CO₂ gas discharge equipment 60 are adjusted to the concentrations in this range, a large reduction effect of the greenhouse gas can be obtained.

Alternatively, the concentration of CO₂ in the gas introduced into the adsorption towers 41a and 41b is more preferably adjusted to 2 mol% or more and 10 mol% or less by the first CO₂ separation equipment. The concentration of CO₂ in the low-concentration CO₂ gas discharged from the low-concentration CO₂ gas discharge equipment 60 is more preferably adjusted to 0 mol% or more and 2 mol% or less, but may be 0.5 mol% or more and 2 mol% or less. When the concentration of CO₂ in the gas introduced into the adsorption towers 41a and 41b and the concentration of CO₂ in the low-concentration CO₂ gas discharged from the low-concentration CO₂ gas discharge equipment 60 are adjusted to the concentrations in this range, the corrosion prevention effect of the pipeline is obtained.

### <Gas reflux equipment>

As described above, the gas reflux equipment 70 includes the high-concentration CO₂ gas discharge apparatus 45 and the reflux pipe 16. As the reflux pipe 16, a pipe generally used for conveying gas is used. Specifically, the gas reflux equipment 70 functions as an element for returning at least a part of the gas discharged from the high-concentration CO₂ gas discharge apparatus 45 to the first CO₂ separation equipment 1 through the reflux pipe 16.

The high-concentration CO₂ gas discharge apparatus 45 is an apparatus configured to desorb and discharge CO₂ from the adsorption separation apparatus 80 (adsorption tower 41) after adsorbing CO₂. That is, the high-concentration CO₂ gas discharge apparatus 45 discharges gas (high-concentration CO₂ gas) containing CO₂ at a concentration higher than the concentration of CO₂ in the low-concentration CO₂ gas discharged by the low-concentration CO₂ gas discharge equipment 60. In the present embodiment, a pump configured to desorb CO₂ from the adsorption separation apparatus 80 by decompression is exemplified as the high-concentration CO₂ gas discharge apparatus 45.

The high-concentration CO₂ gas is refluxed to the first CO₂ separation equipment 1 through the valve 52 and the gas reflux equipment 70 (the high-concentration CO₂ gas discharge apparatus 45 and the reflux pipe 16), and retreated (that is, cryogenic separation treatment). The concentration of CO₂ in the high-concentration CO₂ gas is preferably 50 mol% or more and 99 mol% or less, and more preferably 50 mol% or more and 90 mol% or less. When the concentration of CO₂ in the high-concentration CO₂ gas is adjusted to this range, the efficiency of the CO₂ separation system is improved. The concentration of CO₂ in the high-concentration CO₂ gas can be adjusted by the temperature and pressure during CO₂ adsorption in the towers of the adsorption towers 41a and 41b, and the filling rate of rubber as a CO₂ adsorbent.

Herein, it is extremely important to reflux the high-concentration CO₂ gas to the first CO₂ separation equipment 1 in order to increase the methane recovery rate. This is because, in the present invention, pellet-shaped, powdery, and particulate rubbers are used as CO₂ adsorbents, and high-pressure gaseous methane is present around these CO₂ adsorbents. Therefore, methane is also discharged during discharging the high-concentration CO₂ gas, and discarding this leads to loss of methane. However, methane contained in the high-concentration CO₂ gas is refluxed to the first CO₂ separation equipment 1 and returned again to the second CO₂ separation equipment 2, and thus substantial loss of methane is eliminated.

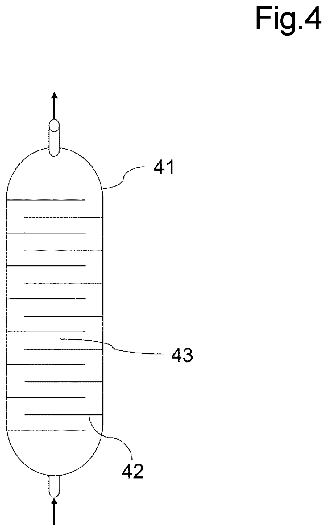

In the adsorption tower 41, in order to improve the amount of CO₂ adsorbed and the adsorption-desorption efficiency, as illustrated in Fig. 4, it is preferable that a long flow path 42 is provided inside the adsorption tower 41 to secure a residence time, and rubber as a CO₂ adsorbent is disposed in space 43 in the flow path 42.

As the rubber used as the CO₂ adsorbent, a crosslinked body of polydimethylsiloxane (PDMS) is desirable. As the crosslinking method, a method using a radical crosslinking agent or a method of crosslinking a plurality of vinyl groups in the molecules of two PDMS by hydrosilation is suitably used. In the latter method, a platinum catalyst is typically used. In addition, in view of cost and resource reuse, it is preferable to use recovered rubber such as waste tires as rubber for a CO₂ adsorbent. In addition, the glass transition temperature of the rubber is desirably -150°C or more and -10°C or less, and the SP value at room temperature is desirably 7.0 (cal/cm³)^{0.5} or more and 10.0 (cal/cm³)^{0.5} or less. The elastic modulus at 25°C is preferably 0.03 MPa or more and 8 MPa or less. Rubber under these conditions has a high amount of CO₂ adsorbed and adsorption-desorption efficiency.

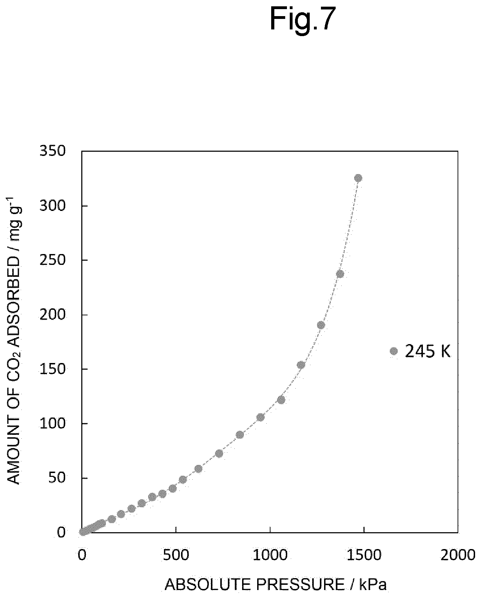

The relationship between the absolute pressure and the amount of CO₂ adsorbed at a temperature of 245 K when the PDMS rubber was used is illustrated in Fig. 7. This rubber has a glass transition temperature of -150°C, an SP value of 7.5 (cal/cm³)^{0.5} at room temperature, and an elastic modulus of about 4 MPa at 25°C. Favorable CO₂ adsorption characteristics are found to be exhibited.

A rubber having an SP value of 10.5 (cal/cm³)^{0.5} or less at room temperature is generally hydrophobic, but some rubbers are likely to adsorb water. In such a case, making the rubber hydrophobic allows a large amount of CO₂ to be absorbed below the freezing point. Below the freezing point, water is likely to be adsorbed to the rubber interface and the void portion, and the adsorption performance is likely to be deteriorated by slight mixing of water. In such a case, a hydrophobic molecule such as decane may be adsorbed to the rubber. As a result, adsorption of water is suppressed, and a high adsorption power of CO₂ is easily maintained. The contact angle of water on the surface of the CO₂ adsorbent may be 80° or more and 150° or less.

It is important that the SP value of rubber at room temperature is close to the SP value of CO₂, but it is known that the SP value of CO₂ increases as the temperature decreases. The SP value of the rubber also increases with a decrease in temperature, but the increase in the SP value of the PDMS rubber is slightly lower than the increase in the SP of CO₂.

Therefore, in the range of -20°C to -40°C, a rubber having a slightly larger SP value than the PDMS rubber is desirable. Examples of such a rubber include a rubber obtained by substituting a methyl group in a molecule of a PDMS rubber with a phenyl group or the like.

In addition, forming the above rubber into a powder shape or a fine particle shape increases the surface area, and CO₂ can be quickly absorbed.

From the viewpoint of the adsorption rate and the desorption rate of CO₂, for example, rubber such as PDMS that is pulverized or micronized to a size of 500 µm or less can be preferably used.

In addition, the pellet-shaped rubber can be easily handled for replacement work and the like and can be preferably used.

Further, the adsorption of CO₂ to the pellet-shaped rubber starts from the vicinity of the rubber surface layer, but the adsorption rate is considerably reduced at a depth of 2.5 mm or more from the surface layer. Therefore, from the viewpoint of the adsorption rate of CO₂, the thickness of the pellet-shaped rubber is preferably 5 mm or less. The lower limit of the thickness of the rubber is not particularly limited, but is preferably 0.1 mm or more from the viewpoint of ease of handling and stability of quality. Therefore, when the rubber is formed into a pellet shape, the thickness thereof is preferably 0.1 mm or more and 5 mm or less. The desorption of CO₂ using rubber can be achieved by reducing the pressure, and heating is not required, thus providing a feature of small energy consumption.

Herein, in order to facilitate replacement of the rubber, it is preferable that the rubber is packed in a mesh or porous bag and provided in the adsorption tower 41.

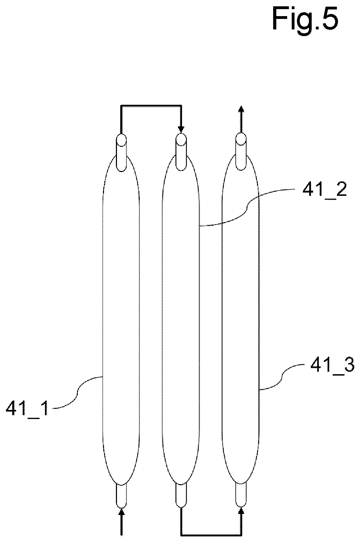

The adsorption separation apparatus 80 may have the first adsorption tower group including a plurality of adsorption towers 41a and the second adsorption tower group including a plurality of adsorption towers 41b. In the first adsorption tower group, for example, a plurality of adsorption towers 41a are disposed in series. Similarly, in the second adsorption tower group, for example, a plurality of adsorption towers 41b are disposed in series. When the adsorption separation apparatus 80 includes the first adsorption tower group and the second adsorption tower group, the adsorption amount of CO₂ and the adsorption efficiency are improved. Fig. 5 illustrates an adsorption tower group (first adsorption tower group and second adsorption tower group) in which three adsorption towers 41_1, 41_2, and 41_3 are disposed in series. When each adsorption tower group (first adsorption tower group and second adsorption tower group) includes three or more adsorption towers 41, it is not necessary to directly connect all of the three or more adsorption towers 41, and some of the adsorption towers 41 (that is, two or more adsorption towers 41) may be connected in series. In addition, the first adsorption tower group and the second adsorption tower group are preferably a pair of adsorption tower groups having the same configuration. That is, it is preferable that the first adsorption tower group and the second adsorption tower group have the same number of adsorption towers and the same disposition of adsorption towers as well as the internal configuration of each adsorption tower.

As a result of various experiments, it has been found that the best breakthrough time per adsorption tower (41) was 5 minutes or more and 60 minutes or less for improving the amount of CO₂ adsorbed and the adsorption-desorption efficiency.

In the present invention, rubber is used as the CO₂ adsorbent, and a powder shape or a fine particle shape is preferably used for improving the adsorption amount and adsorption efficiency.

In this case, the gap region between the rubbers is large and the pressure during adsorption is a high pressure of 5 MPa or more and 45 MPa or less, and thus a desired gas such as methane is likely to be trapped therein. That is, there arises a problem such that the recovery rate of a desired gas is likely to decrease.

In order to solve this problem, in the present invention, gas reflux equipment 70 including the high-concentration CO₂ gas discharge apparatus 45 and the reflux pipe 16 is provided, and gas containing high-concentration CO₂ is retreated using a cryogenic separation apparatus that is the first CO₂ separation equipment 1 to increase a recovery rate of a desired gas. This treatment causes a desired gas recovery rate to be 90% or more.

It is essential that the gas reflux equipment 70 include the reflux pipe 16. In the embodiment described above, a pump is used as the high-concentration CO₂ gas discharge apparatus 45, but various apparatuses can be used as the high-concentration CO₂ gas discharge apparatus 45. For example, when a compressor (a type of pump) is used as the high-concentration CO₂ gas discharge apparatus 45, it is possible to forcibly send the gas containing high-concentration CO₂ to the first CO₂ separation equipment 1 by pressurizing the gas. On the other hand, when a pump is used as the high-concentration CO₂ gas discharge apparatus 45, sending the heat medium to the second CO₂ separation equipment 2 also increases the temperature of the adsorption tower, thereby sending the desorbed CO₂ to the first CO₂ separation equipment 1. That is, the gas reflux equipment 70 may include, for example, a pump (compressor), a heating apparatus, or both a pump (compressor) and a heating apparatus in addition to the reflux pipe 16. The gas can be refluxed by applying heat to the adsorption separation apparatus 80 by the heating apparatus. To desorb a large amount of CO₂, a compressor capable of reducing the pressure inside the adsorption tower of the second CO₂ separation equipment 2 is suitably used.

A CO₂ separation system using rubber as an adsorbent is characterized by being capable of separating high-concentration CO₂ and requiring less energy for the separation than a chemical absorption method using an amine solvent. Further, the desired gas recovery rate is high due to the reflux of the above gas containing high concentration of CO₂.

When the mixed gas including methane having a CO₂ concentration of about 70% as a main component was treated using the equipment of the present embodiment, it has been confirmed that CO₂ can be efficiently separated with low energy, and methane gas having a CO₂ concentration of 2% or less can be efficiently supplied. It can be said that the CO₂ separation system of the present invention makes it possible to transport natural gas obtained in the polar region by pipeline at low cost. Biogas also generally contains a high concentration of CO₂, and thus the CO₂ separation system of the present invention is also effective for treating biogas.

### Examples

The present invention will be described in detail with reference to Examples. However, the present invention is not limited to Examples.

### <CO₂ separation system>

CO₂ was separated from the gas to be treated by the following CO₂ separation system using a mixed gas of CO₂ and N₂ as the gas to be treated.

The CO₂ separation system according to the embodiment was configured by the following elements. The following elements are connected through piping.
Cylinder for gas to be treated (CO₂ gas cylinder and N₂ gas cylinder)
Gas flow meter for adjusting flow rate of CO₂ gas cylinder
Gas flow meter for adjusting flow rate of N₂ gas cylinder
First cooling apparatus configured to remove a part of CO₂ in gas to be treated and moisture contained as impurities
Column packed with rubber (KMP-602 (true specific gravity 0.98, particle size distribution 4 to 60 um) manufactured by Shin-Etsu Chemical Co., Ltd., or a pulverized product of K-125 (true specific gravity 1.20, particle size distribution 350 to 1000 um) manufactured by TOGAWA RUBBER CO., LTD.) serving as a CO₂ adsorbent
(column volume: 22.6 cm³, rubber filling rate: 76.7% (KMP-602), 77.0 (K-125))
Second cooling apparatus configured to control column temperature
Pressure gauge for measuring pressure in column and CO₂ recovery container
Column flow meter for controlling column pressure
Gas chromatograph for measuring a concentration of a component in gas discharged from the column
CO₂ recovery container for recovering CO₂ adsorbed to rubber
Third cooling apparatus configured to control temperature of CO₂ recovery container

The first cooling apparatus, the third cooling apparatus, and the CO₂ recovery container described above are examples of the first CO₂ separation equipment (cryogenic separation apparatus), and the above column is an example of the second CO₂ separation equipment.

A CO₂ adsorption test and a CO₂ desorption-recovery test were performed using the above CO₂ separation system. The piping connection after the column is different between the CO₂ adsorption test and the CO₂ desorption-recovery test, and is switched by a valve provided in the pipe immediately after the column. Specifically, the column is connected to the gas chromatograph through a flowmeter for controlling the column pressure during the CO₂ adsorption test, and is connected to the CO₂ recovery container during the CO₂ desorption-recovery.

The pressure of the gas to be treated was adjusted with a secondary pressure gauge of a regulator. The gas to be treated was flowed through the first cooling apparatus configured to remove moisture, and the gas with moisture removed was supplied to the column.

### <Calculation method of amount of CO₂ adsorbed>

As the amount of CO₂ adsorbed, there was adopted the amount of CO₂ adsorbed at the time point when the temporal change of the outlet concentration of the adsorption tower capable of maximizing the adsorption-desorption efficiency became C/C₀ = 1/3 in the characteristic diagram (CO₂ gas breakthrough time characteristic) showing the adsorption-desorption characteristics of CO₂ using the rubber in Fig. 6. The amount of CO₂ adsorbed is the area of the shaded portion in the figure, and was calculated from "amount of adsorbed = CO₂ concentration (C/C₀) × time (time at C/C₀ = 1/3) × flow rate".

### [Example 1]

KMP-602 manufactured by Shin-Etsu Chemical Co., Ltd. was used as a CO₂ adsorbent. As the gas to be treated, CO₂ had 20 mol%, and N₂ had 80 mol%. The column pressure was 6 MPa, and the column temperature was -30°C. Specifically, first, the column temperature was maintained at -30°C by the second cooling apparatus, only N₂ was flowed into the column, and the flow velocity of the column flowmeter for controlling the column pressure was set to 0 to increase the column pressure to 6 MPa.

Thereafter, the flow rate of the supplied gas was adjusted to 40 sccm and 120 sccm by a gas flowmeter connected to a CO₂ gas cylinder and a N₂ gas cylinder, respectively, the gas to be treated in which these were mixed was flown into the column, and at the same time, the flow rate of the column flowmeter for controlling the column pressure was adjusted to 200 sccm to start the CO₂ adsorption test, the CO₂ concentration for a predetermined time was measured by a chromatograph, and the amount of CO₂ adsorbed was calculated.

After the amount of CO₂ adsorbed to the rubber adsorbent reached saturation (C/C₀ = 1), the supply of the gas to be treated was stopped, and a valve immediately after the column was connected to a CO₂ recovery container to start a CO₂ desorption-recovery test, and the CO₂ desorption-recovery amount was measured. The column temperature during CO₂ desorption-recovery was set to 23°C, the temperature of the recovery container was set to - 40°C, and the CO₂ desorption-recovery test was terminated when the pressure between the column and the CO₂ recovery container became constant. The CO₂ desorption-recovery amount was calculated from the weight change of the CO₂ recovery container before and after the test. In the configuration of the separation system of the present invention, it is desirable to forcibly move the high-concentration CO₂ gas discharged from the column to the cryogenic separation apparatus using a pump, more specifically, a compressor as a high-concentration CO₂ gas discharge apparatus that is a component of the gas reflux equipment. However, in the experiment in which the CO₂ recovery amount is 1 kg or less, the gas cannot be stably moved by pressurization by the compressor, and thus in the present embodiment, in order to achieve pressure-driven mass transfer (gas transfer) similar to that of the compressor, the reflux is performed to the cryogenic separation apparatus by increasing the temperature of the CO₂ adsorption tower.

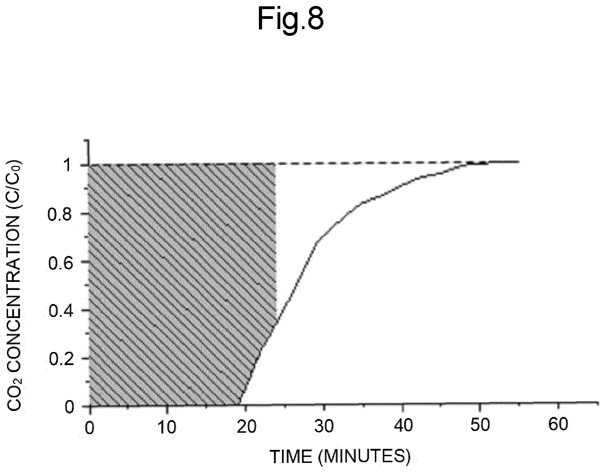

Fig. 8 is a breakthrough curve in Example 1. The amount of CO₂ adsorbed was 1.8 g from the area of the shaded portion in Fig. 8, and satisfactory adsorption characteristics were exhibited at a breakthrough time of 23 minutes with respect to the target value of 5 to 60 minutes. Table 1 shows the results of the CO₂ adsorption test and the CO₂ desorption-recovery test.

The pressure of the column and the recovery container during CO₂ desorption-recovery was 2.9 MPa, the CO₂ desorption-recovery amount was 1.3 g, and the recovery rate was 72 mol%, indicating that a sufficiently high concentration of CO₂ was recovered. In addition, CO₂ is liquefied at -40°C and 1 MPa, and thus the desorbed and recovered CO₂ is considered to be liquefied CO₂.

As described above, Example 1 exhibited favorable adsorption characteristics with an adsorption amount of 1.8 g at a breakthrough time of 23 minutes under the conditions of an adsorption pressure of 6 MPa and a CO₂ concentration of the gas to be treated of 20 mol%. In addition, the temperature during desorption-recovery was -40°C, and the liquefied CO₂ recovery rate was 72%, indicating favorable desorption-recovery characteristics.

**[Table 1]**

| Item | Amount of CO₂ adsorbed (g) | Amount of CO₂ recovered (g) | Recovery rate of CO₂ (mol%) |
|---|---|---|---|
| Target value | - | - | 50~99 |
| Example 1 | 1.8 | 1.3 | 72 |

### [Example 2]

A pulverized product of K-125 manufactured by TOGAWA RUBBER CO., LTD. was used as a CO₂ adsorbent. A desorption experiment of 1.8 g of CO₂ adsorbed was performed using the same apparatus as in Example 1. Table 2 shows the results of the CO₂ adsorption test and the CO₂ desorption-recovery test. The pressure of the column and the recovery container during CO₂ desorption-recovery was 1.0 MPa, the CO₂ desorption-recovery amount was 1.7 g, and the recovery rate was 94 mol%, indicating that a significantly high concentration of CO₂ was recovered.

**[Table 2]**

| Item | Amount of CO₂ adsorbed (g) | Amount of CO₂ recovered (g) | Recovery rate of CO₂ (mol%) |
|---|---|---|---|
| Target value | - | - | 50~99 |
| Example 2 | 1.8 | 1.7 | 94 |

### Industrial Applicability

The present invention can efficiently remove CO₂ from natural gas, biogas, and the like containing a large amount of CO₂. For example, this can treat natural gas or the like containing a high concentration of CO₂ at low cost, allowing inexpensive supply to the pipeline. As described above, the present invention can achieve effective use of gas that has been difficult to use so far, and is considered to greatly contribute to industrial and social development.

As an example in the case of natural gas development, there is provided a CO₂ separation system that separates CO₂ from natural gas containing CO₂ at a high concentration of 30% or more, and supplies CO₂ at 2% or less.

Natural gas containing a large amount of CO₂ has a problem of freezing in a low temperature zone such as a polar region. In addition, natural gas containing 2% or more of CO₂ corrodes the pipeline. However, the use of the CO₂ separation system of the present invention efficiently treats natural gas containing a high concentration of CO₂ at low cost, allowing inexpensive transportation to the pipeline.

### Reference Signs List

- 1: First CO₂ separation equipment (cryogenic separation apparatus)
- 2: Second CO₂ separation equipment
- 3: Cooling equipment
- 4: Decompression equipment
- 5: Dehydration equipment
- 11: Pipe
- 12: Pipe
- 13: Pipe
- 14: Pipe (first pipe)
- 15: Pipe
- 16: Reflux pipe (second pipe)
- 17: Discharge pipe
- 21: Compression apparatus
- 22: Dehydration apparatus
- 23: Cooling apparatus
- 24: Liquefied CO₂ discharge apparatus
- 31: Pipe
- 32: Pipe
- 33: Pipe
- 41: Adsorption tower
- 41a: Adsorption tower
- 41b: Adsorption tower
- 41_1: Adsorption tower
- 41_2: Adsorption tower
- 41_3: Adsorption tower
- 42: Flow path
- 43: Space
- 45: High-concentration CO₂ gas discharge equipment
- 46: Flow rate regulator
- 51: Switching valve
- 52: Switching valve
- 53: Switching valve
- 60: Low-concentration CO₂ gas discharge equipment
- 70: Gas reflux equipment
- 80: Adsorption separation apparatus
- 101: CO₂ separation system

## Claims

1. A CO₂ separation system, comprising:
first CO₂ separation equipment;
second CO₂ separation equipment;
a first pipe;
low-concentration CO₂ gas discharge equipment; and
gas reflux equipment including a second pipe and a high-concentration CO₂ gas discharge apparatus, wherein
the first CO₂ separation equipment includes a cryogenic separation apparatus configured to separate CO₂ from gas to be treated by cryogenic separation treatment,
the first pipe supplies gas discharged from the first CO₂ separation equipment to the second CO₂ separation equipment,
the second CO₂ separation equipment includes an adsorption separation apparatus including rubber as a CO₂ adsorbent,
the low-concentration CO₂ gas discharge equipment discharges gas containing low concentration CO₂ from the second CO₂ separation equipment,
the high-concentration CO₂ gas discharge apparatus discharges gas containing CO₂ having a concentration higher than the low concentration from the second CO₂ separation equipment,
in the gas reflux equipment, at least a part of the gas discharged from the high-concentration CO₂ gas discharge apparatus is returned to the first CO₂ separation equipment through the second pipe, and
the first CO₂ separation equipment performs cryogenic separation treatment for separating CO₂ from the gas returned by the gas reflux equipment.

2. The CO₂ separation system according to claim 1, wherein
the adsorption separation apparatus includes a first adsorption tower group including one or more adsorption towers and a second adsorption tower group including one or more adsorption towers,
the adsorption tower has a flow path through which gas flows while being retained therein, and the CO₂ adsorbent, and
the CO₂ separation system further includes a cooling means capable of cooling the flow path and the CO₂ adsorbent.

3. The CO₂ separation system according to claim 2, wherein
the first adsorption tower group and the second adsorption tower group are a pair of adsorption tower groups having a same configuration.

4. The CO₂ separation system according to claim 2, wherein
at least a part of the adsorption towers constituting the first adsorption tower group and the second adsorption tower group is disposed in series in the first adsorption tower group and the second adsorption tower group.

5. The CO₂ separation system according to claim 2, wherein a gas breakthrough time per adsorption tower is 5 minutes or more and 60 minutes or less.

6. The CO₂ separation system according to any one of claims 2 to 5, wherein
a CO₂ concentration in gas introduced into the first adsorption tower group and the second adsorption tower group is adjusted to 10 mol% or more and 40 mol% or less, and
a CO₂ concentration in gas discharged from the first adsorption tower group and the second adsorption tower group is adjusted to 2 mol% or more and 10 mol% or less.

7. The CO₂ separation system according to any one of claims 2 to 5, wherein
a CO₂ concentration in gas introduced into the first adsorption tower group and the second adsorption tower group is adjusted to 5 mol% or more and 10 mol% or less, and
a CO₂ concentration in gas discharged from the first adsorption tower group and the second adsorption tower group is adjusted to 0 mol% or more and 2 mol% or less.

8. The CO₂ separation system according to any one of claims 2 to 7, wherein
an adsorption pressure of the adsorption tower is adjusted to 5 MPa or more and 45 MPa or less.

9. The CO₂ separation system according to claim 2, wherein
a temperature of the cooling is -50°C or more and 0°C or less.

10. The CO₂ separation system according to claim 1, wherein
a CO₂ concentration of the high concentration is 50 mol% or more and 99 mol% or less.

11. The CO₂ separation system according to any one of claims 1 to 10, wherein
the rubber is provided in one or more states selected from the group consisting of a pellet shape, a powder shape, and a fine particle shape.

12. The CO₂ separation system according to claim 11, wherein
the rubber is provided by being packed in a mesh or porous bag.

13. The CO₂ separation system according to claim 1, wherein
the cryogenic separation apparatus includes: a compression apparatus configured to compress supplied gas; a cooling apparatus configured to cool gas introduced through the compression apparatus; and an apparatus configured to discharge CO₂ liquefied by being subjected to the cooling.

14. The CO₂ separation system according to claim 1, wherein
the gas to be treated is introduced into the cryogenic separation apparatus through decompression equipment configured to decompress gas to separate liquid CO₂.

15. The CO₂ separation system according to any one of claims 1 to 14, wherein
the gas to be treated is introduced into the cryogenic separation apparatus through dehydration equipment configured to perform dehydration.
